# EUROPEAN PATENT APPLICATION

(11) **EP 4 435 249 A1**
(43) Date of publication of application: **25.09.2024**
(21) Application number: 22895654.6
(22) Date of filing: 16.11.2022
(51) Int. Cl.: F02M 55/02

(54) **STAINLESS STEEL FUEL PIPE HAVING CONNECTING HEAD PORTION, AND TREATMENT METHOD FOR SOFTENING SURFACE LAYER OF SAID CONNECTING HEAD PORTION**

(30) Priority: 16.11.2021 JP 2021186548
(71) Applicant: Usui Co., Ltd., Sunto-gun, Shizuoka 411-8610 (JP)
(72) Inventor: NAGASHIMA, Koichiro, Sunto-gun, Shizuoka 411-8610 (JP)
(74) Representative: Müller-Boré & Partner Patentanwälte PartG mbB
(86) International application number: PCT/JP2022/042601
(87) International publication number: WO 2023/090373

(57) **Abstract**

Provided is a method for softening a surface layer of an end of a stainless-steel fuel piping with a high sealing performance, which can ensure the sealing performance even with high hardness of its sealing face and besides, even tightening with high torque to improve the sealing performance does not cause whole deformation of the tightening portion to ensure the sealing performance.

The stainless-steel fuel piping includes a connection head that has a truncated-cone or truncated-arc shaped sealing face and is formed at a connection end of a steel pipe with a small diameter and a thick wall, wherein the sealing face of the connection head is subjected to softening heat treatment to the predetermined hardness by laser to ensure the high sealing performance.

## Description

### Technical Field

The present invention relates to a stainless-steel fuel piping used as a fuel supply path for an internal combustion engine, high-pressure hydrogen gas piping used for fuel cells, and the like. In particular, the invention relates to the stainless-steel fuel piping having a connection head that is formed, for example, by press working at an end of the piping and a method for softening the connection head at the piping end.

### Background Art

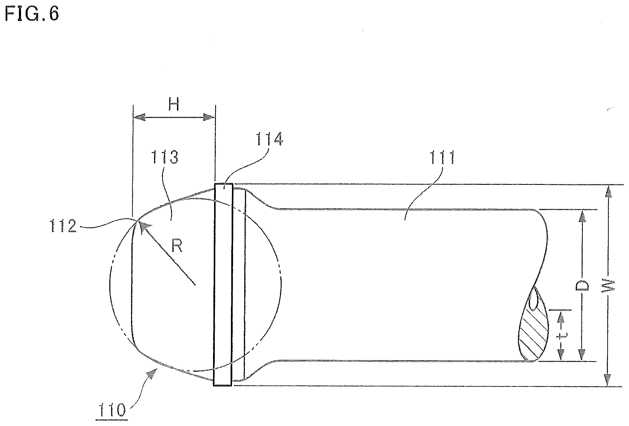

Known are fuel piping having connection heads including fuel injection lines (fuel injection pipes) having connection heads that are used for fuel supply paths for an internal combustion engine. For the fuel injection lines (fuel injection pipes), for example, known is a fuel injection line for the internal combustion engine including, at least one of the line's ends, a connection head formed thereon by upsetting, the connection head comprising a forward sealing taper portion formed by press of a punch member in the axial direction of the line (see, e.g. PLTs 1 and 2). Further, for the fuel piping for the internal combustion engine, the type of a stainless-steel fuel piping shown in FIG. 6 is known. This fuel piping has a connection head 110 including an edge face 112 formed at a connection end of a steel pipe 111 with a small diameter and a thick wall, an annular flange 114 formed to be spaced from the edge face 112 in the axial direction of the pipe 111, and a sealing face (forward sealing taper portion) 113 continuing from the edge face 112 to the annular flange 114 and tapering toward the edge.

With regard to production methods of such connection heads of the fuel injection line having the connection head formed by upsetting and the stainless-steel fuel piping having the connection head which is formed at the piping end and has the sealing face formed by pressing or the like, known is a process of normalizing annealing by inductive heating prior to formation of the connection head 110 of the fuel injection line or the stainless-steel fuel piping thereon by pressing so that the cold deformation effect which occurs when the connection head 110 is formed by pressing or the like on the piping end can be produced without the formation of cracks and with only a moderate level of stresses being produced (see, PLT 1).

### Citation List

### Patent Literature

PLT 1: JP H1-203649 A
PLT 2: JP H10-68367 A

### Summary of Invention

### Technical Problem

The present invention has an object to solve problems, in particular, about the stainless-steel fuel piping as described below.

When the stainless-steel fuel piping is used, a contact surface of a high-hardness sealing face (forward sealing taper portion) makes deformation of a contact surface of the sealing face impossible because the contact surface follows a mating member if sufficient axial force cannot be available due to following rotation or the like in tightening of the piping. Therefore, there is a risk that sealing performance cannot be ensured. In other words, when the sealing face is softened, the contact surface is easily plastic-deformed to adapt to a mating member, thereby improving the sealing performance with relatively low torque. However, if a whole of the tightening portion of the fuel piping is softened, the whole tightening portion is necessarily deformed in repeated tightening due to conceivable attachment and detachment of the piping in inspection and the like, which causes the problem that can ensure no sealing performance.

The present invention has been made to solve the problems, in particular, that there is the risk that the sealing performance cannot be ensured due to the hard sealing face and that the whole tightening portion is necessarily deformed in repeated tightening due to conceivable attachments and detachments of the piping in inspection and the like, and thereby the sealing performance cannot be also ensured in the stainless-steel fuel piping and a method of producing the piping. Thus, the invention aims to provide the stainless-steel fuel piping having a connection head with high sealing performance and a treatment method for softening a surface layer of the connection head.

### Solution to Problem

The stainless-steel fuel piping of the present invention includes a connection head that has a truncated-cone or truncated-arc shaped sealing face and is formed at a connection end of a steel pipe with a small diameter and a thick wall, wherein the connection head is subjected to softening heat treatment to a predetermined hardness on a surface layer of the sealing face.

The method of softening a surface layer of an end of a stainless-steel fuel piping of the present invention includes irradiation to a desired area on the sealing face of the connection head with a laser to cause heating treatment due to thermal energy generation on the surface layer of the sealing face, thereby performing softening heat treatment only on the surface layer of the sealing face to a predetermined hardness. Further, for the process of performing softening heat treatment on the surface layer of the sealing face of the connection head, an another method of the invention includes formation of a labyrinth structure with a concave-convex pattern on the surface layer of the sealing face by laser to perform softening heat treatment only on the surface layer of the sealing face to the predetermined hardness due to heat effect caused by the laser to the concave-convex pattern of the labyrinth structure and its vicinity.

For a range to be softened to the predetermined hardness on the stainless-steel fuel piping of the invention, it is preferable that 0.35 mm to 0.65D (D: the outer diameter of the stainless-steel fuel pipe) from the edge of the sealing face, and 0.05 mm or deeper and not more than half the pipe wall thickness in depth from the sealing face. Additionally, the hardness of the softened area is preferably lower by 50 HV or more than that prior to the softening of the connection head. As for the stainless-steel fuel piping, one having the wall thickness t of 0.125D to 0.27D, a radius R of a spherical sealing part of 0.51D to 0.65D, a distance H from the edge face to the most-expanded pipe portion of 0.5D to 0.7D, and a diameter W of the most-expanded pipe portion of 1.25D to 1.5D may be used as shown in FIG. 6.

### Advantageous Effects of Invention

According to the stainless-steel fuel piping of the present invention, which has the connection head formed at the connection end of the thick-wall steel pipe, irradiating the surface layer of the sealing face with a laser produces thermal energy on the surface layer of the sealing face to subject the surface layer of the sealing face to softening heat treatment to the predetermined hardness. This can control deformation of a mating part in tightening of seal not to cause large deformation of the mating part to thereby ensure the sealing performance. Further, because of performing the softening heat treatment only on the surface layer of the sealing face to the predetermined hardness, it prevents the tightening portion from deforming as a whole in tightening several times to ensure the sealing performance.

In addition, since the method of softening the surface layer of an end of the stainless-steel fuel piping according to the invention employs the process of subjecting the surface layer of the sealing face and its vicinity to softening heat treatment to the predetermined hardness, it is possible to adjust the hardness of the surface layer of the sealing face depending on temperature and time during the heat treatment. Besides, because of cooling of only the sealing face at the piping end, it allows for rapid cooling by self-heat capacity, which makes it possible to prevent sensitization that is a material deterioration phenomenon specific to stainless steel, namely which is a phenomenon showing the formation of a chromium depleted layer due to precipitation of chromium carbide at the grain boundaries in the structure and the condition of the structure with grain coarsening.

Furthermore, another method of softening the surface layer of the end of the stainless-steel fuel piping according to the invention employs the process of subjecting the surface layer of the sealing face to softening heat treatment to the predetermined hardness, and as the process of softening heat treatment, the labyrinth structure with the concave-convex pattern is formed by laser on the sealing face and softening heat treatment is subjected to the concave-convex pattern of the labyrinth structure and its vicinity, thereby achieving the similar effect to the above-described effect.

### Brief Description of Drawings

FIG. 1 is a side view illustrating the first embodiment of the stainless-steel fuel piping of the present invention.
FIG. 2 is a side view illustrating the second embodiment of the stainless-steel fuel piping of the present invention.
FIG. 3 is a side view illustrating the third embodiment of the stainless-steel fuel piping of the present invention.
FIG. 4 is a side view illustrating the fourth embodiment of the stainless-steel fuel piping of the present invention.
FIGs. 5A and 5B are diagrams showing one example of the method for softening a surface layer at an end of the stainless-steel fuel piping of the invention, and in particular, illustrating labyrinth grooves processed by laser on the surface layer of the sealing face: FIG. 5A is a schematic diagram illustrating an enlarged part of the sealing face with the labyrinth grooves processed by the laser; and FIG. 5B is a sectional view of FIG. 5A taken along the line b-b.
FIG. 6 is a side view illustrating of one example of the conventional stainless-steel fuel piping, which is targeted by the present invention.

### Description of Embodiments

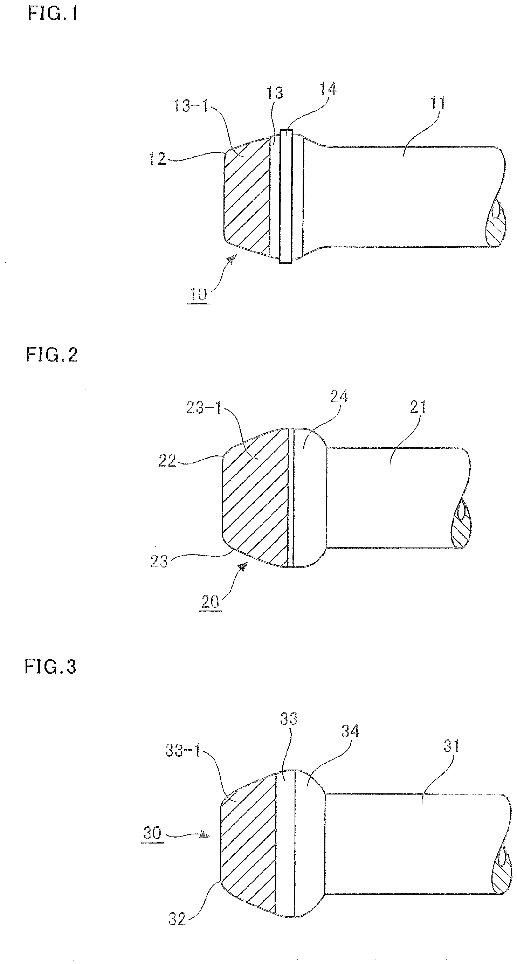

The stainless-steel fuel piping shown in FIG. 1 is similar in structure to the conventional stainless-steel fuel piping shown in FIG. 6, and it has a connection head 10 at a connection end of a steel pipe 11 with a thick wall, the connection head 10 being composed of a truncated-cone or truncated-arc shaped edge face (pressing seat face) 12, an annular flange 14 formed to be spaced from the edge face 12 in the axial direction of the pipe, and a sealing face 13 continuing from the edge face 12 to the annular flange 14 and tapering toward the edge. The stainless-steel fuel piping is subjected to softening heat treatment to a predetermined hardness on, for example, the entire circumference of a hatched area 13-1 of the sealing face 13 of the connection head 10, by laser irradiation.

In this regard, the reason that the area subjected to softening heat treatment to have the predetermined hardness is limited to the hatched area of the sealing face 13 of the connection head 10 is that especially when the sealing face 13 is softened, its contact surface is easily plastic-deformed to adapt to a mating member, thereby improving the sealing performance with relatively low torque, whereas when the whole of the tightening portion of the fuel piping is softened, the whole tightening portion is necessarily deformed in repeated tightening, thereby causing the problem that cannot ensure the sealing performance. In addition, softening treatment on the whole tightening portion results in a crushed edge of the sealing face, and thus leakage necessarily occurs, however, softening treatment only on the sealing face allows to keep the form of the edge to thereby ensure the sealing performance, which makes it possible to prevent leakage from occurring even if tightening is repeated several times.

The stainless-steel fuel piping shown in FIG. 2 has a connection head 20 at a connection end of a steel pipe 21 with a thick wall, the connection head 20 being composed of a truncated-cone or truncated-arc shaped edge face (pressing seat face) 22, an arc-shaped portion 24 continuing and smoothly reducing the outside diameter toward the opposite side to the edge face in the axial direction of the pipe, and a sealing face 23 continuing from the edge face 22 toward the side of the thick-wall steel pipe 21 and tapering toward the edge, without the annular flange 14 shown in FIG. 1 structurally. This stainless-steel fuel piping is subjected to softening heat treatment to the predetermined hardness on almost the entirety (hatched area 23-1) of the sealing face 23, by laser irradiation.

The stainless-steel fuel piping shown in FIG. 3 has a connection head 30 at a connection end of a steel pipe 31 with a thick wall, the connection head 30 being composed of a truncated-cone or truncated-arc shaped edge face (pressing seat face) 32, an arc-shaped portion 34 continuing and smoothly reducing the outside diameter toward the opposite side to the edge face in the axial direction of the pipe, and a sealing face 33 continuing from the edge face 32 toward the side of the thick-wall steel pipe 31 and tapering toward the edge, without the annular flange 14 shown in FIG. 1 structurally. This stainless-steel fuel piping is subjected to softening heat treatment to the predetermined hardness on a hatched area 33-1 of the sealing face 33, by laser irradiation.

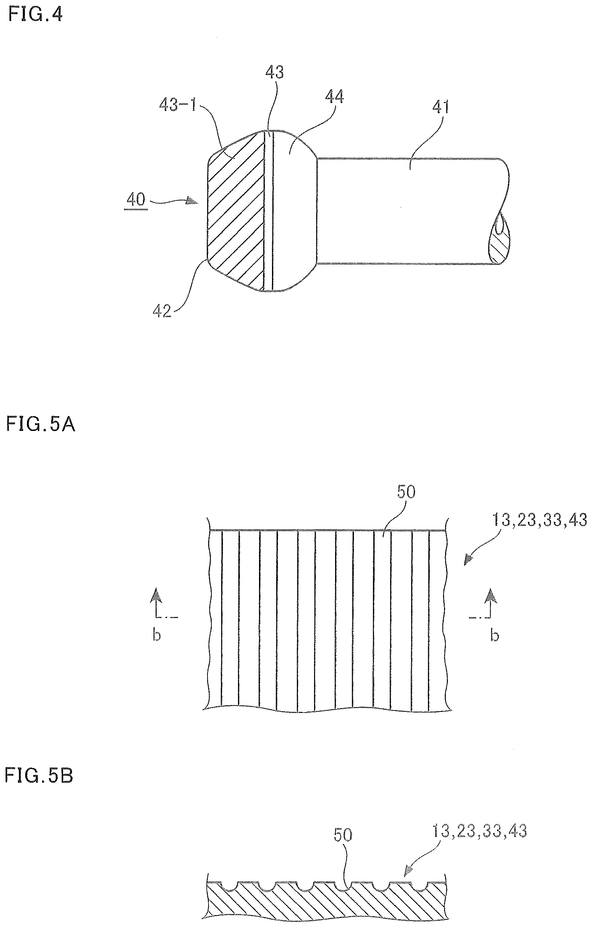

The stainless-steel fuel piping shown in FIG. 4 has a connection head 40 at a connection end of a steel pipe 41 with a thick wall, the connection head 40 being composed of a truncated-cone or truncated-arc shaped edge face (pressing seat face) 42, an arc-shaped portion 44 continuing and smoothly reducing the outside diameter toward the opposite side to the edge face in the axial direction of the pipe, and a sealing face 43 continuing from the edge face 42 toward the side of the thick-wall steel pipe 41 and tapering toward the edge, without the annular flange 14 shown in FIG. 1 structurally. This stainless-steel fuel piping is subjected to softening heat treatment to the predetermined hardness on a hatched area 43-1 of the sealing face 43, by laser irradiation.

As described above, the stainless-steel fuel piping of the present invention is subjected to softening heat treatment to the predetermined hardness on the surface layer of the sealing face by laser irradiation and it allows for rapid cooling by self-heat capacity due to appropriate heat input and cooling to the sealing face at the piping end, thereby making it possible to prevent sensitization which is the material deterioration phenomena specific to stainless steel. Thus, deformation of a mating part can be controlled in tightening of seal to prevent the mating part from deforming highly, thereby ensuring the sealing performance. Furthermore, since only the surface layer of the sealing face is softened to the predetermined hardness, a hardness inside of the piping is maintained to control deformation in the whole of the connection head to load in tightening, which produce an effect to ensure the sealing performance in repeated tightening for several times.

Then, a process for providing a concave-convex pattern is described based on FIG. 5, in addition to the softening treatment on the surface layer at the end of the stainless-steel fuel piping shown in FIGs. 1 to 4.

The method of softening the surface layer at the end of the stainless-steel fuel piping according to the present invention includes forming labyrinth grooves 50 simultaneously with the softening treatment by laser processing on the sealing face 13, 23, 33, or 43 of the connection head 10, 20, 30, or 40 at the end of the stainless-steel fuel piping shown in FIGs. 1 to 4, respectively, to make a labyrinth structure softened on the sealing face as shown in FIGs. 5A and 5B. Each of the labyrinth grooves formed by laser processing has, for example, 43 µm in width, 10 µm in depth, and 100 µm in pitch (57 µm in width of crest). The labyrinth structure makes the surface layer of the sealing face softer to achieve a sealing face having a lower hardness than that of a sealing portion of a mating part and that of the inside of the connection head before the softening. The hardness of the sealing face having the labyrinth structure may be also adjusted by heating and cooling the sealing face after the formation of the labyrinth structure or by performing the softening heat treatment on the sealing face prior to the formation of the labyrinth structure.

As described above, the method of softening the surface layer at the end of the stainless-steel fuel piping of the invention employs the way of forming the labyrinth seal structure by the laser on the surface layer of the sealing face to allow only the surface layer of the sealing face to be softened to have the predetermined hardness thanks to the labyrinth structure, as the process of performing the softening heat treatment on the surface layer of the sealing face of the connection head. This enables not only exact adjustment of the hardness of the surface layer of the sealing face at the end of the piping which has been work-hardened, but also rapid cooling by self-heat capacity due to proper heat input and cooling to the sealing face at the piping end, thereby making it also possible to prevent sensitization which is material deterioration phenomena specific to stainless steel.

For the stainless-steel fuel piping of the invention, it is preferable to perform the softening heat treatment to the predetermined hardness on an area within a range of 0.35 mm to 0.65D (D: the outer diameter of the stainless-steel fuel pipe) from the edge of the sealing face 13, 23, 33, or 43 and 0.05 mm or deeper and not more than half the pipe wall thickness in depth from the sealing face, although it is not particularly limited. In addition, the hardness of the softened area is preferably lower by 50 HV or more than that prior to the softening of the connection head. Furthermore, for the stainless-steel fuel piping, one can be used with the wall thickness t of 0.125D to 0.27D, the radius R of the sealing face of 0.51D to 0.65D, the distance H from the edge face to the most-expanded pipe portion of 0.5D to 0.7D, and the diameter W of the most-expanded pipe portion of 1.25D to 1.5D, as shown in FIG. 6.

The present invention is described more particularly by means of examples below, but it is not limited to the examples. Modifications and variations of the invention without departing from the scope and spirit of the invention are deemed to fall within the technical scope of the invention.

In the examples, regarding effects shown on the surface layer of the sealing face on the connection head at the stainless-steel fuel piping end, sealing performance tests were conducted by varying the depth to be softened and then resultant sealing effects were observed.

### [Example 1]

As a base material of the steel pipe, used was a stainless-steel pipe material with the outer diameter D of 6.35 mm, the inner diameter d of 3.05 mm, the wall thickness t of 1.65 mm, the radius R of a spherical sealing part at the worked pipe end of 4 mm, and the distance H from the edge face to the most-expanded pipe portion of 3.1 mm. The stainless-steel pipe material was subjected to softening heat treatment to the predetermined hardness on the surface layer of the sealing face at its connection end by laser irradiation. The softening heat treatment was performed on an area of 0.5 mm from the edge of the sealing face and within not more than half the pipe wall thickness in depth from the sealing face, and the hardness HV was set as 169 to 252 HV

Table 1 shows results of the tests for the softening heat treatment at the connection end of the stainless-steel pipe material in Example 1. Table 2 shows results of sealing tests in tightening to check the presence or absence of leakage when pressurized to 105 MPa.

**[Table 1]**

| <Results of Tests using Steel pipe base material with Outer diameter D of 6.35 mm> | | | | | | |
|---|---|---|---|---|---|---|
| | Hardness Measurement Point: Distance of 0.1 (mm) from Outer surface | | | Hardness Measurement Point: Distance of 0.1 (mm) from Inner surface | | |
| Distance from Edge (mm) | Unsoftened piping (HV) | Surface-softened piping (HV) | Whole-softened piping (HV) | Unsoftened piping (HV) | Surface-softened piping (HV) | Whole-softened piping (HV) |
| 0.35 | 310 | 180 | 165 | 306 | 289 | 180 |
| 0.5 | 289 | 185 | 178 | 305 | 273 | 185 |
| 1.0 | 310 | 169 | - | 204 | 206 | - |
| 1.5 | 316 | 241 | 187 | 235 | 233 | 194 |
| 2.0 | 317 | 252 | | 291 | 320 | |
| 2.5 | 326 | 287 | 198 | 356 | 334 | 172 |
| 3.0 | 323 | 288 | - | 337 | 356 | - |
| 3.5 | 311 | 276 | 257 | 357 | 357 | 201 |
| 4.0 | 269 | 275 | - | 326 | 309 | - |
| 4.5 | 299 | 308 | 237 | 281 | 256 | 225 |
| 5.0 | 341 | 329 | - | 200 | 193 | - |
| 5.5 | 317 | 317 | 196 | 200 | 187 | 198 |

**[Table 2]**

| Sealing Tests in Tightening (Pressure of 105 MPa) | | |
|---|---|---|
| The Number of Tightening | Whole softening | Surface softening |
| 1 | ○ | ○ |
| 2 | ○ | ○ |
| 3 | ○ | ○ |
| 4 | ○ | ○ |
| 5 | × | ○ |
| 10 | - | ○ |
| 15 | - | ○ |
| 20 | - | ○ |
| 25 | - | ○ |
| 30 | - | ○ |

| | | |
|---|---|---|
| ∘: No leakage occurred ×: Leakage occurred | | |

From the results shown in Tables 1 and 2, for the stainless-steel fuel piping with the connection head formed at the connection end of the thick-wall steel pipe, it became clear that when the laser irradiation was performed on the point of 0.5 mm from the edge of the piping, the hardness at the depth of 0.1 mm from the outer surface (surface layer) in the range of 0.35mm to 1 mm was lower by 50 HV or more than that of the unsoftened piping, whereas at the depth of 0.1 mm from the inner surface, the hardness was almost equal to that of the unsoftened piping in all range. With regard to the piping whole-softened by high frequency, it was softened by 50 HV or more compared to the unsoftened piping even when measured both at the depth of 0.1 mm from the inner surface and from the outer surface.

As is also clear from the result of the example, for the stainless-steel fuel piping with the connection head formed at the connection end of the thick-wall steel pipe, the laser irradiation to the surface layer of the sealing face causes thermal energy generation on the surface layer to provide a softened layer surface of the sealing face with the desired hardness. Thus, the contact surface of the sealing face is plastic-deformed in tightening to adapt to a mating member to thereby ensure the sealing performance.

In addition, the results show that since only the surface layer of the sealing face was softened to the predetermined hardness, the tightening portion could be prevented from wholly deforming in the repeated tightening to thereby ensure the sealing performance. Consequently, it is proved that the softening heat treatment to the predetermined hardness is preferably performed on an area within the range of 0.35 mm to 0.65D from the edge of the sealing face and 0.05 mm or deeper and not more than half the pipe wall thickness in depth from the sealing face, and further the hardness of the softened area is preferably lower by 50 HV or more than that prior to the softening of the connection head, as described above.

### Reference Signs

- 10, 20, 30, 40: connection head
- 11, 21, 31, 41: thick-wall steel pipe
- 12, 22, 32, 42: edge face of piping
- 13, 23, 33, 43: sealing face
- 14: annular flange
- 24, 34, 44: arc-shaped portion
- 13-1, 23-1, 33-1, 43-1: hatched area of the sealing face
- 50: labyrinth grooves
- D: outer diameter of the stainless-steel fuel piping
- H: distance from the edge face to the most-expanded pipe portion
- R: radius of spherical sealing part
- t: pipe wall thickness
- W: diameter of the most-expanded pipe portion

## Claims

1. A stainless-steel fuel piping, including a connection head at a connection end of a steel pipe with a small diameter and a thick wall, the connection head having a truncated-cone or truncated-arc shaped sealing face, **characterized in that**
the connection head has a surface layer subjected to softening heat treatment to a predetermined hardness on the sealing face.

2. A method of softening a surface layer of an end of a stainless-steel fuel piping, the piping including a connection head at a connection end of a steel pipe with a small diameter and a thick wall, the connection head having a truncated-cone or truncated-arc shaped sealing face, according to claim 1, the method comprising
irradiating a desired area on the sealing face of the connection head with a laser to cause heating treatment due to thermal energy generation on the surface layer of the sealing face to perform softening heat treatment only on the surface layer of the sealing face to a predetermined hardness.

3. A method of softening a surface layer of an end of a stainless-steel fuel piping, the method comprising, for a process of performing softening heat treatment only on the surface layer of a truncated-cone or truncated-arc shaped sealing face of a connection head according to claim 1,
forming a labyrinth structure with a concave-convex pattern on the surface layer of the sealing face by laser to perform softening heat treatment only on the surface layer of the sealing face to a predetermined hardness due to heat effect caused by the laser to the concave-convex pattern of the labyrinth structure and its vicinity.
